# EUROPEAN PATENT APPLICATION

(11) **EP 4 848 177 A1**
(43) Date of publication of application: **02.12.2026**
(21) Application number: 26164460.3
(22) Date of filing: 12.03.2026
(51) Int. Cl.: G06Q 10/087, G06Q 10/0875

(54) **MACHINE LEARNING BASED SYSTEM FOR OPTIMIZATION OF REORDER POINTS IN AN INVENTORY SYSTEM**

(30) Priority: 27.05.2025 US 202519219519
(71) Applicant: Aurora Flight Sciences Corporation; a subsidiary of The Boeing Company, Arlington Virginia 22202 (US)
(72) Inventor: POKRAJAC, David, Arlington, 22202 (US); WANG, Zhennong, Arlington, 22202 (US)
(74) Representative: St Clair Jones, Gregory Arthur Langley

(57) **Abstract**

A method for ordering parts. Part information is received for a part in inventory. A quantile based aggregate demand is determined using the part information as an input to a machine learning model that is trained to output a predicted quantile based aggregate demand for a selected quantile, wherein the quantile based aggregate demand is a reorder point. An order is generated for the part using the reorder point.

## Description

### BACKGROUND INFORMATION

### 1. Field:

The present disclosure relates generally to managing inventory and in particular, to determining optimal reorder points for inventory.

### 2. Background:

Inventory management involves processes of ordering, storing, tracking, and controlling an inventory of items. These items in the inventory can be goods, materials, or products. For example, inventory management can be performed for inventory such as aircraft or automotive parts. The management of inventory involves balancing a supply of inventory with the demand for the inventory to ensure that the right quantity of items is available at the right time while minimizing excess inventory and storage costs.

With respect to inventory management, orders for inventory can be made at reorder points. A reorder point is an inventory level at which an order should be placed to replenish stock before it runs out. The reorder point can be determined using factors such as average demand, lead time, lead time variability, and desired safety stock to account for unexpected delays or demand spikes.

### SUMMARY

An embodiment of the present disclosure provides a part inventory system comprising a computer system and a part manager located in the computer system. The part manager is configured to perform operations. The operations comprise receiving part information for a part in inventory. The operations comprise determining a quantile based aggregate demand using the part information as an input to a machine learning model that is trained to output a predicted quantile based aggregate demand for a selected quantile. The quantile based aggregate demand is a reorder point. The operations comprise generating an order for the part using the reorder point.

Another embodiment of the present disclosure provides a computer system, a machine learning model system in the computer system, a cluster model in the computer system, and a part manager in the computer system. The machine learning model system has been trained to predict quantile aggregate demands for a quantile for parts using part information. The cluster model is configured to determine a part group for a part using the part information. The part manager is configured to perform operations. The operations comprise receiving part information for a part in inventory. The operations comprise determining a quantile based aggregate demand using the part information as an input to the machine learning model. The quantile based aggregate demand is a reorder point. The operations comprise generating an order for the part using the reorder point.

Yet another illustrative embodiment of the present disclosure provides a method for ordering parts. Part information is received for a part in inventory. A quantile based aggregate demand is determined using the part information as an input to a machine learning model that is trained to output a predicted quantile based aggregate demand for a selected quantile, wherein the quantile based aggregate demand is a reorder point. An order is generated for the part using the reorder point.

Still another illustrative embodiment of the present disclosure provides a computer program product for ordering parts. The computer program product comprises a set of one or more computer-readable storage media and program instructions stored on the set of one or more storage media to perform operations. The operations comprise receiving part information for a part in inventory. The operations comprise determining a quantile based aggregate demand using the part information as an input to a machine learning model that is trained to output a predicted quantile based aggregate demand for a selected quantile. The quantile based aggregate demand is a reorder point. The operations comprise generating an order for the part using the reorder point.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments may be implemented;
**Figure 2** is a block diagram of an inventory environment in accordance with an illustrative embodiment;
**Figure 3** is an illustration of a block diagram of components for training a machine learning model in accordance with an illustrative embodiment;
**Figure 4** is an illustration of a dataflow for transforming data from data sources into data used to predict aggregate demand for a quantile in accordance with an illustrative embodiment;
**Figure 5** is an illustration of a dataflow for generating a cluster model in accordance with an illustrative embodiment;
**Figure 6** is an illustration of a block diagram of a process for creating a machine learning model to predict a quantile aggregate demand for a reorder point in accordance with an illustrative embodiment;
**Figure 7** is an illustration of a block diagram of a data flow for determining a reorder point in accordance with an illustrative embodiment;
**Figure 8** is an illustration of a dataflow for a gate in accordance with an illustrative embodiment;
**Figure 9** is an illustration of a flowchart of a process for ordering parts in accordance with an illustrative embodiment;
**Figure 10** is an illustration of a flowchart of a process for selecting a machine learning model to predict a quantile based aggregate demand in accordance with an illustrative embodiment;
**Figure 11** is an illustration of a flowchart of a process for determining a part group for a part in accordance with an illustrative embodiment;
**Figure 12** is an illustration of a flowchart of a process for determining a quantile aggregate demand using part information and a part group in accordance with an illustrative embodiment;
**Figure 13** is an illustration of a flowchart of a process for selecting a reorder point selection technique in accordance with an illustrative embodiment;
**Figure 14** is an illustration of a flowchart of a process for training a machine learning model in accordance with an illustrative embodiment;
**Figure 15** is an illustration of a block diagram of a data processing system in accordance with an illustrative embodiment;
**Figure 16** is an illustration of a block diagram of an aircraft manufacturing and service method in accordance with an illustrative embodiment; and
**Figure 17** is an illustration of a block diagram of an aircraft in which an illustrative embodiment may be implemented.

### DETAILED DESCRIPTION

The illustrative embodiments recognize and take into account one or more different considerations as described herein. Current techniques used in inventory management can calculate a reorder point as follows:
$Reorder Point = D L + Safety Stock$ (1) where D is average demand, L is average lead time, and Safety Stock is additional inventory beyond expected demand during lead time to reduce the risk of stockouts caused by demand variability or supply delays. Safety stock can be calculated as follows: $Safety Stock = z \sqrt{{Lσ}_{d}^{2} + {D}^{2} {σ}_{L}^{2}}$ (2) where ${σ}_{d}^{2}$ is variance of demand, ${σ}_{L}^{2}$ is variance of lead time, D is the average demand, L is the average lead time, and z is the z-score corresponding to the service level. The score is denoted here as q. In this example, lead time is the time between placing an order to replenish inventory for a part and receiving the order for the part.

Reorder point indicates an amount that should be left when placing an order to replenish the inventory so that inventory does not run out before new stock arrives. The equation can determine a probability q that inventory is available to satisfy the demand while waiting for replenishment of the inventory. For example, if q=0.95, a 95% probability is present that inventory will be available to fulfill demand until the order is received to replenish the inventory.

This type of model assumes that demand and lead time are independent of each other. These two factors also assume a Gaussian distribution of both lead time and demand. These assumptions of independence and distribution do not always hold true in actual practice.

For example, demand and lead time can have correlations to each other. For example, during peak seasons, both demand and lead times can increase due to higher order volumes and supply chain congestion. This supply chain congestion can result from limits in the production capacity of a supplier.

If demand and lead time are not independent, the safety stock calculated using the standard formula can be inaccurate. In such cases, more sophisticated models that account for this correlation might be needed. In fact, the safety stock can result in holding dead parts. These dead parts are parts that remain in unused inventory in the warehouse. Keeping as low of an amount as possible for safety stock is desirable.

Reduction of safety stock can be made through having increased accuracy in forecasting how much inventory will be needed and how long it would take to replenish inventory. Thus, it is desirable to have a more accurate prediction of demand and lead time.

Further, demand and lead time do not always follow a normal distribution. For example, demand can be skewed, have seasonality, or exhibit other patterns. Lead times can be influenced by various factors such as supplier reliability, transportation issues, and production schedules.

If the actual distributions for demand and lead time deviate significantly from normality, the safety stock calculated using the normal distribution assumption may not provide the desired service level. As a result, stockouts can occur.

Thus, the illustrative embodiments provide method, apparatus, systems, and computer program products for predicting reorder points for inventory. This production for inventory can include parts such as aircraft parts, automotive parts, and other items.

In the illustrative examples, the machine learning model is trying to estimate the q-th quantile of the distribution of the aggregate demand for the part. This aggregate demand is the total demand that occurs during the lead time.

In these examples, q-th quantile (where q E(0,1) is the value below which a fraction q of the data falls. For example, the 0.5 quantile is the median, meaning 50% of the data lies below that value. In the context of forecasting reorder points, estimating the q-th quantile means predicting a value such that a q-level probability is present that the actual demand during the specified period will be less than or equal to this predicted value.

In these examples, a quantile is a statistical value that divides a probability distribution or dataset into equal-sized intervals based on the cumulative probability. For example, a quartile is a type of quantile that has 4 parts. As another example, a 0.95 quantile is the value below which 95% of the data falls. The quantile can also be referred to as the 95th percentile.

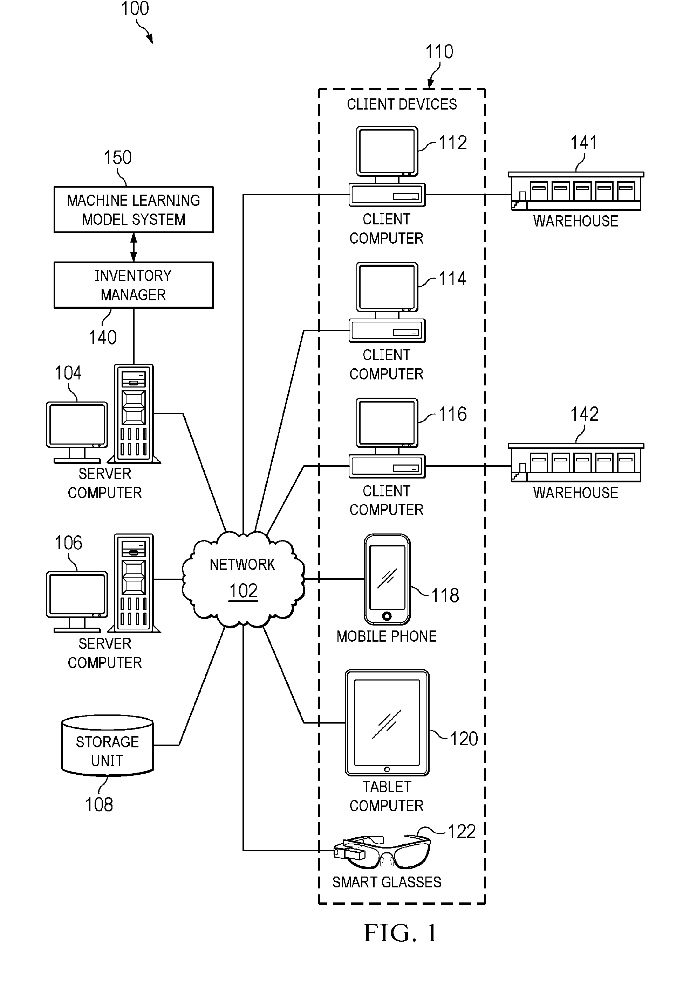

With reference now to the figures and, in particular, with reference to **Figure 1****,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server computer **104** and server computer **106** connect to network **102** along with storage unit **108.** In addition, client devices **110** connect to network **102.** Client devices **110** can be, for example, computers, workstations, network computers, vehicles, machinery, appliances, or other devices that can process data. As depicted, client devices **110** include client computer **112,** client computer **114,** client computer **116,** mobile phone **118,** tablet computer **120,** and smart glasses **122.** Client devices **110** can be, for example, computers, workstations, or network computers. In the depicted example, server computer **104** provides information, such as boot files, operating system images, and applications to client devices **110.**

Further, in this illustrative example, server computer **104,** server computer **106,** storage unit **108,** and client devices **110** are network devices that connect to network **102** in which network **102** is the communications media for these network devices. Some or all of client devices **110** may form an Internet of Things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program instructions located in network data processing system **100** can be stored on a computerrecordable storage medium and downloaded to a data processing system or other device for use. For example, program instructions can be stored on a computerrecordable storage medium on server computer **104** and downloaded to client devices **110** over network **102** for use on client devices **110.**

In this illustrative example, inventory manager **140** manages stock across multiple locations such as warehouse **141** and warehouse **142.** In this illustrative example, stock levels are tracked at warehouse **141** using client computer **112.** Stock levels are also tracked at warehouse **142** using client computer **116.** These client computers can receive information about stock through sensors or human operators at the warehouses.

Client computer **112** and client computer **116** can provide real-time information about the quantity, location, and status of stock in warehouse **141** and in warehouse **142.** With this information, inventory manager **140** can monitor usage rates and shipping activity. Further, inventory manager **140** can also perform reordering of stock. For example, inventory manager **140** identifies reorder points to trigger reordering of stock.

In this manner, when available stock in a warehouse falls below its reorder point, inventory manager **140** can automatically generate a replenishment order. This replenishment order can include at least one of an internal transfer of parts from another warehouse, a manufacturing request, a purchase order, or other action to replenish the stock.

Further, the phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

In these illustrative examples, this determination of reorder points is performed by inventory manager **140** using machine learning model system **150.** Machine learning model system **150** includes one or more machine learning models that predicts a reorder point for stock in warehouse **141** and warehouse **142.** This machine learning model is trained with historical data in a manner that takes into account at least one of demand or lead time do not always follow a normal distribution.

Thus, the use of inventory manager **140** with machine learning models **224** can provide increased efficiency in managing stock for warehouse **141** and warehouse **142.** For example, the use of machine learning model system **150** by inventory manager **140** can improve inventory management, reduce holding costs, and reduce capital tied up in inventory.

In the depicted example, network data processing system **100** is the internet with network **102** representing a worldwide collection of networks and gateways that use the Transmission Control Protocol/Internet Protocol (TCP/IP) suite of protocols or other networking protocols to communicate with one another. At the heart of the internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the internet, an intranet, a local area network (LAN), a metropolitan area network (MAN), or a wide area network (WAN). **Figure 1** is intended as an example, and not as an architectural limitation for the different illustrative embodiments.

As used herein, "a number of" when used with reference to items, means one or more items. For example, "a number of different types of networks" is one or more different types of networks.

Further, in other illustrative examples, an inventory manager with a machine learning model system may be implemented at client computer **112** to manage inventory in warehouse **141.** Further in this example, machine learning model system **150** may be implemented using client computer **116** to manage inventory in warehouse **142.** In other illustrative examples, machine learning model system **150** can be located at server computer **106** instead of at server computer **104.**

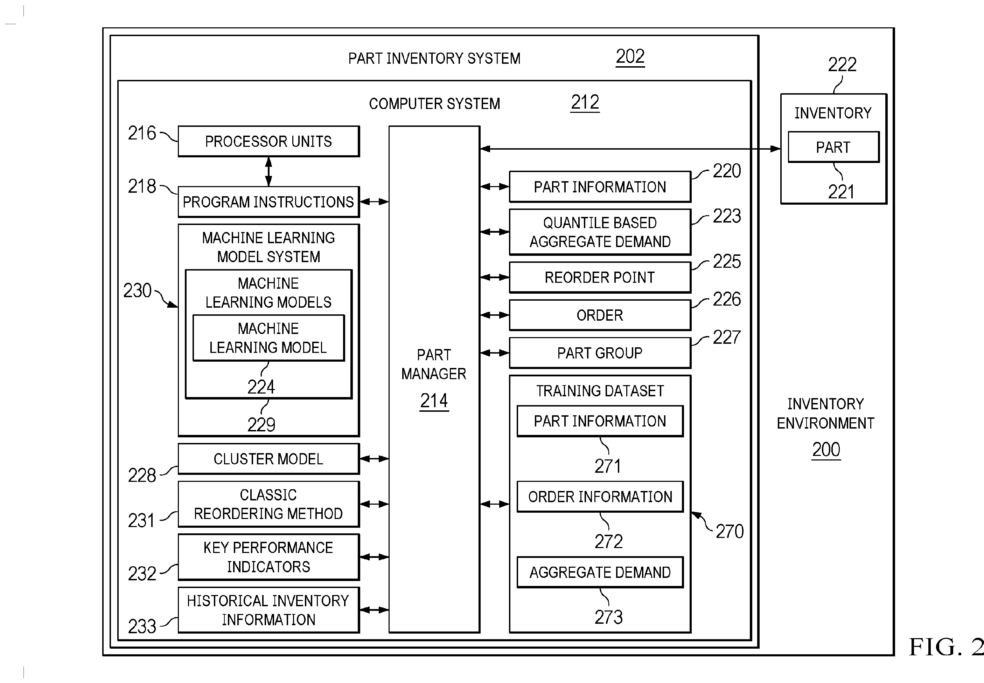

With reference now to **Figure 2****,** an illustration of a block diagram of an inventory environment is depicted in accordance with an illustrative embodiment. In this illustrative example, inventory environment **200** includes components that can be implemented in hardware such as the hardware shown in network data processing system **100** in **Figure 1****.**

In this example, inventory management system **202** operates to manage an inventory of parts.

This management system comprises computer system **212** and part manager **214.** As depicted, part manager **214** is located in computer system **212.**

Part manager **214** can be implemented in software, hardware, firmware or a combination thereof. When software is used, the operations performed by part manager **214** can be implemented in program instructions configured to run on hardware, such as a processor unit. When firmware is used, the operations performed by part manager **214** can be implemented in program instructions and data and stored in persistent memory to run on a processor unit. When hardware is employed, the hardware can include circuits that operate to perform the operations in part manager **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **212** is a physical hardware system and includes one or more data processing systems. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, part manager **214** receives part information **220** for part **221** in inventory **222.** In the illustrative example, a part is a component or element of a larger system or item. A part can be characterized by specific specifications, dimensions, and usability criteria that ensure it fits and functions correctly within the intended assembly or application. This part can be identified by a unique identifier such as a part number. As used in these examples, part **221** is not a single physical instance of an item. The item can be a material, object, assembly, system, or component that can be tracked, used, or processed.

Part manager **214** determines a quantile based aggregate demand **223** using the part information **220** as an input to machine learning model **224** that is trained to output a predicted quantile based aggregate demand for a selected quantile. In this example, quantile based aggregate demand **223** is a reorder point **225.** In this example, machine learning model **224** can take a number of different forms. For example, machine learning model **224** is selected from a group comprising a linear regression model, a random forest regression model, a neural network, a support vector regression model, and other suitable machine learning models.

In this illustrative example, part manager **214** generates order **226** for part **221** using reorder point **225.** In the illustrative example, reorder point **225** is the inventory level for part **221** at which order **226** should be placed to replenish part **221** in inventory before part **221** is no longer available in inventory **222.** The generation of the order **226** by part manager **214** is performed when reorder point **225** is reached or at tolerance before reorder point **225** is reached for part **221** in inventory **222.**

In some illustrative examples, part manager **214** determines part group **227** for part **221** using part information **220** and cluster model **228.** For example, a part identifier such as a part number, a serial number, or other identifier can be input into cluster model **228.** In response, cluster model **228** outputs part group **227.**

In one illustrative example, cluster model **228** is a machine learning model that has been trained to label or place parts into groups based on the similarity of attributes between parts. In this illustrative example, cluster model **228** identifies clusters of parts that share similar attributes such as at least one of physical characteristics, dimensions, material, mechanical properties, thermal properties, electrical properties, function, performance, and other attributes in part information **220.**

Part manager **214** selects machine learning model **224** from a plurality of machine learning models **229** in machine learning model system **230** based on part group **227** identified for part **221.** With this example, a machine learning model in the plurality of machine learning models **229** has been trained to predict quantile based aggregate demand **223** for a particular group of parts. In other words, quantile based aggregate demand **223** for each part group can be predicted using a machine learning model associated with the part group.

In another illustrative example, part manager **214** determines part group **227** for part **221** using part information **220** and cluster model **228.** With this example, part manager **214** determines quantile based aggregate demand **223** using part information **220** and part group **227** as inputs to machine learning model **224.** In this example, machine learning model **224** has been trained to handle determining quantile based aggregate demand for multiple types of parts.

In another illustrative example, a gating function can be used to select between machine learning model **224** and classic reordering method **231** used in determining reorder point **225** to generate order **226.** Classic reordering method **231** is a technique or method that does not employ machine learning model to predict quantile based aggregate demand **223.** Classic reordering method **231** can be selected from a group comprising a reorder point method, a min-max system, a rule based reordering policy, and other reordering methods that are currently available.

In this example, selecting between machine learning model **224** and classic reordering method **231,** part manager **214** determines a first number of key performance indicators **232** using reorder point **225** predicted by machine learning model **224** for part **221** and historical inventory information **233** for part **221.** In this example, historical inventory information **233** is information about stock levels for part **221.** Historical inventory information **233** for part **221** can be an aggregate inventory data for all units of the part number of part **221** and not an individual item. This historical information can also include movements and usage of part **221.**

Part manager **214** also determines a second number of key performance indicators **232** using reorder point **225** determined by classic reordering method **231** and historical inventory information **233** for part **221.** In this example, historical inventory information **233** can be the information about requests, orders, or uses of part **221** over time.

In this example, key performance indicators **232** values are used to evaluate the effectiveness of machine learning model **224** and classic reordering method **231** in specific inventory management goals. Key performance indicators **232** can be selected from at least one of a total number of out of stock intervals; a total duration of the out of stock intervals; a total holding cost; a percentage of demand met without stockouts; or other indicators of interest. Total number of out of stock intervals is the number of times inventory levels drop to zero over a specific period. A total duration of the out of stock intervals is the total time during which the inventory level is zero. Total holding cost is total cost of holding inventory over a specific period of time. Percentage of demand met without stockouts is the proportion of customer demand that is fulfilled without experiencing stockouts.

Key performance indicators can be assigned weights based on the importance of different inventory management objectives. These objectives can be, for example, at least one of ensuring product availability, reducing holding costs, maximizing inventor turnover, reducing lead time, increasing responsiveness to supply chain fluctuations; or other objectives.

With determination of the first number of key performance indicators **232** and the second number of key performance indicators **232,** part manager **214** uses classic reordering method **231** in place of machine learning model **224** in response to the second number of the key performance indicators **232** being better than the first number of the key performance indicators **232.**

In this illustrative example, part manager **214** train machine learning model **224** using training dataset **270.** In one example, part manager **214** creates training dataset **270,** which comprises part information **271,** order information **272,** and aggregate demand **273.**

In this example, part information **271** comprises a part number and optionally at least one of a part description, a part manufacturer, a part group, a part type, a program product, an assembly, a subassembly, or other part information. Further in this example, order information **272** includes, for example, order date, quantity ordered and order urgency.

Aggregate demand **273** is the overall demand for a part occurring during the lead time. In this example, aggregate demand **273** includes aggregate demand that corresponds to order information **272.** This aggregate demand can be determined for each order in order information **274.**

Values of aggregate demand **273** is compared to the aggregate demand values predicted by machine learning model **224.** The comparison is used to determine the loss and update internal parameters in machine learning model **224** to reduce the loss. The values of the internal parameters of machine learning model **224** are adjusted using back propagation or other appropriate algorithms. In this manner, the prediction error is reduced for machine learning model **224.**

In one illustrative example, one or more technical solutions are present that overcome a technical problem with maintaining an inventory of parts that meets inventory management objectives. As a result, one or more technical solutions may provide a technical effect of reorder points for ordering parts to replenish inventory in a realistic manner. In the illustrative examples, the prediction of the reorder point can be performed even when the demand and lead times are dependent on each other. Further, these examples can also take into account that the distribution of demand and lag times may not follow a normal or Gaussian curve.

Computer system **212** can be configured to perform at least one of the steps, operations, or actions described in the different illustrative examples using software, hardware, firmware or a combination thereof. As a result, computer system **212** operates as a special purpose computer system in which part manager **214** in computer system **212** enables determining reorder points to order parts. In these examples, an optimal inventory can be predicted for ordering parts to reduce the possibility of running out of parts prior to the inventory being replenished. In particular, part manager **214** transforms computer system **212** into a special purpose computer system as compared to currently available general computer systems that do not have part manager **214.**

In the illustrative example, the use of part manager **214** in computer system **212** integrates processes into a practical application for ordering parts that increases the performance of computer system **212.** In other words, part manager **214** in computer system **212** is directed to a practical application of processes integrated into part manager **214** in computer system **212** that predicts reorder points for parts more accurately as compared to current techniques. As a result, computer system **212** can be implemented to order parts in a manner that can meet various objectives such as reducing costs, stock outs, and other objectives. In these examples, part manager **214** can generate orders for parts. With ordering parts using reorder points predicted by the part manager **214,** a practical application can occur in which an order for a part can be ordered and received in a manner that reduces the possibility that a stock out for a part occurs in which demand exceeds the available inventory for the part prior to the order for that part being received.

The illustration of different components in **Figures 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

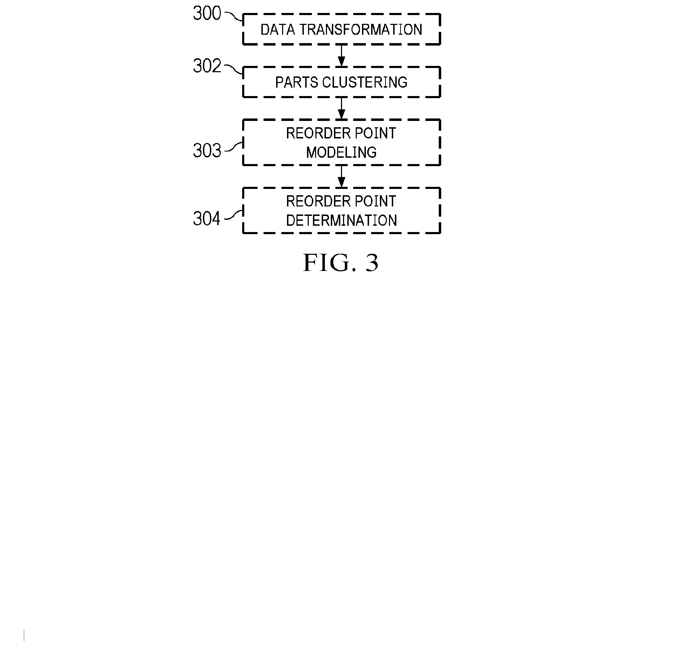

Turning to **Figure 3****,** an illustration of phases in a process flow for predicting reorder points for parts is depicted in accordance with an illustrative embodiment. These phases can be implemented in part manager **214** in **Figure 2****.** In this example, process flow **305** comprises data transformation **300,** parts clustering **302,** reorder point modeling **303,** and reorder point determination **304.**

In data transformation **300,** data is extracted from various sources. This phase involves also involves calculating parameter such as lead time and aggregate demand. This data is used in the other phases for training machine learning model and determining a reorder point.

Next in parts clustering **302,** a model is created to map a part to group parts based on their similarity. In this manner, a part group can be identified for the part. In reorder point modeling **303,** a machine learning model is selected and trained to predict quantile-based aggregate demand for use as a reorder point. In reorder point determination **304,** a reorder is determined for a part.

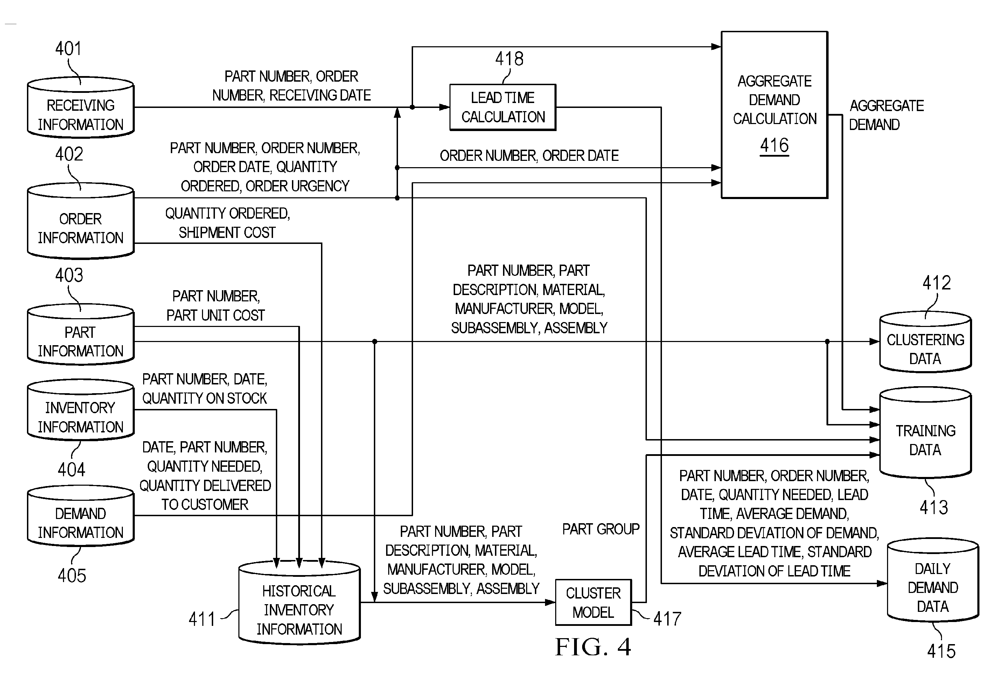

With reference to **Figure 4****,** an illustration of a dataflow for transforming data from data sources into data used to predict aggregate demand for a quantile is depicted in accordance with an illustrative embodiment. This dataflow is an example in implementation for data transformation **300** in **Figure 3****.**

In this illustrative example, data sources are depicted for generating data utilized in training a machine learning model to predict quantile based aggregate demand and to use the machine learning model to predict quantile-based aggregate demand.

These data sources include receiving information **401,** order information **402,** part information **403,** inventory information **404,** and demand information **405.** The data from these data sources are used to generate historical inventory information **411,** clustering data **412,** training data **413,** and daily demand data **415.**

In this illustrative example, receiving information **401** includes part number, order number, and receiving rate. Order information **402** includes part number, order number, order date, quantity ordered, order urgency, shipment cost, and quantity needed. Further in this example, part information **403** includes part number, part description, material, manufacturer, model, subassembly, assembly, and part unit cost.

Inventory information **404** includes part number, date, and quantity on stock. This information is the current inventory information. In this example, demand information **405** includes date, part number, quantity needed, and quantity delivered to customer.

In this example, historical inventory information **411** includes date, part number, quantity on stock from inventory information **404.** Historical inventory information **411** also includes part number and part unit cost from part information **403.** This historical inventory information **411** also includes quantity ordered and shipment cost from order information **402.** In this example, clustering data **412** includes part number, part description, material, manufacturer, model, subassembly, and assembly from part information **403.**

Further in this example, training data **413** includes part number, part description, material, manufacturer, model, subassembly, and assembly from part information **403.** Training data **413** includes part number, order number, order date, quantity ordered, and order urgency from order information **402.**

Training data **413** also includes aggregate demand. This aggregate demand is calculated by aggregate demand calculation **416.** In this example, the aggregate demand is a sum of the daily demands for a part during the lead time. This component determines the aggregate demand for a part using part number, order number, and receiving date from receiving information **401;** order number and order date from order information **402,** and date, part number, and quantity needed from demand information **405.** This aggregate demand data can be correlated with other data using information such as part number, order date, receiving date, and quantity needed.]

In determining aggregate demand, aggregate demand calculation **416** estimates the aggregate demand during the time between the order is made and the ordered parts are received. This aggregate demand for each ordered parts is utilized subsequently to estimate the quantile of the aggregate demand observed as a random variable. For example, the aggregate demand for a 0.95 quantile is the demand level that does not exceed 95% of the time. This quantile-based demand serves as a reorder point, ensuring that inventory is replenished before the stock drops below the critical level, reducing the risk of stockouts due to fluctuations in demand or delays receiving an order for the part.

For example, during continuous observation of ordering activities over a period of time, 500 orders are recorded along with their aggregate demands and corresponding lead times. These orders are then sorted in ascending order based on aggregate demand. To find the 0.95 quantile, the 475th order is identified, since 500×0.95=475. The aggregate demand associated with this order represents the 0.95 quantile-meaning that 95% of the observed aggregate demands fall below this value.

In another example, a historical aggregate demand during lead time from 20 past orders is as follows: 18, 12, 25, 9, 23, 14, 21, 26, 8, 22, 15, 19, 27, 13, 17, 10, 16, 11, 20, 24. This data is sorted in ascending order: [8, 9, 10, 11, 12, 13, 14, 15, 16, 17, 18, 19, 20, 21, 22, 23, 24, 25, 26, 27].

The data is sorted because quantiles are based on rank order of values and not the original sequence. 20 values are present this the 0.95 quantile is determined as follows: 0.95 × 20 = 19. Thus, the 0.95 quantile is the 19th value, which is 26 units. In this example, the quantile-based aggregate demand for the 0.95 quantile is 26.

Additionally, the part group is included in training data **413.** This part group is generated by cluster model **417.** Cluster model **417** uses part number, part description, material, manufacturer, model, subassembly, and assembly to determine a part group for a particular part identified by the part number.

In this illustrative example, daily demand data **415** includes part number, order number, date, and quantity needed, average demand, standard deviation of demand, from order information **402.** In this example, daily demand data **415** also includes lead time, average lead time, and standard deviation of lead time received from the lead time calculation **418.** Lead time calculation **418** calculates the lead time using the part number, order number, and receipt date from receiving information **401,** and order number and order date from order information **402.**

In this illustrative example, the part number is received from multiple sources for a particular type of use stated. The part number is used to correlate or associate information from different sources with each other. For example, a part number and quantity order in order information **402** can be correlated to information, such as description, using the part number associated with the part description in part information **403.** This part number can also be included in data sent from a source even though the part number is not shown in this example. Every instance of the part number is not shown to avoid obscuring the illustration of generating use data from source data. The part number can be assumed to be present to enable correlation of data from different sources for a particular use.

The dataflow in this diagram is an example of one implementation of dataflow used to obtain data for training a machine learning model to predict quantile based aggregate demand that is used for an order point to reorder the parts. This illustration is not meant to limit the manner in which other illustrative examples can be implemented.

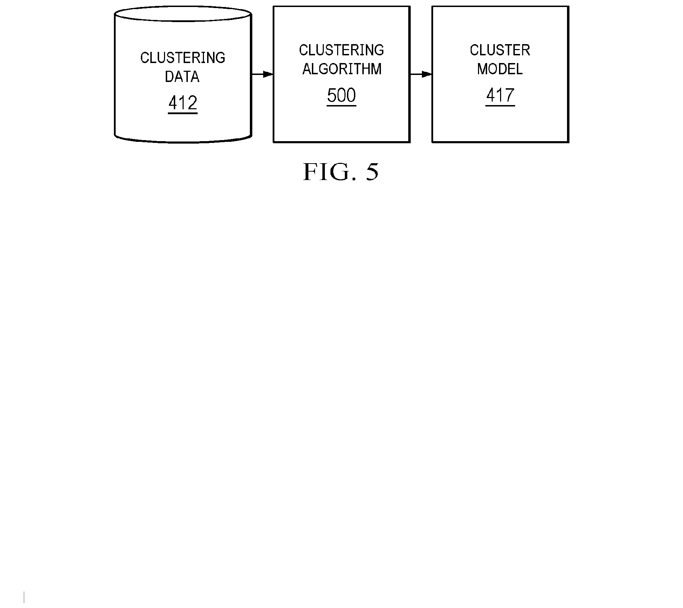

With reference to **Figure 5****,** an illustration of a dataflow for generating a cluster model is depicted in accordance with an illustrative embodiment. In the illustrative examples, the same reference numeral may be used in more than one figure. This reuse of a reference numeral in different figures represents the same element in the different figures. This dataflow is an example of an implementation for parts clustering **302 in** **Figure 3****.**

In this illustrative example, cluster model **417** is generated using clustering algorithm **500.** This clustering algorithm can be implemented using a number of clustering items selected from at least one of k-means, DBSCAN, CLARANS, hierarchical clustering, or for other clustering algorithms.

Clustering algorithm **500** receives information for parts such as part description, part material, part manufacturer, model that utilizes the part, subassembly, and assembly of the part in clustering data **412,** to create groups of similar parts. This information is referred to as attributes for the parts. These groups are referred to as part groups. In this example, clustering algorithm **500** performs clustering in batch mode using information from multiple parts. This clustering can group part space and similarity of attributes.

The amount of similarity can be set using various thresholds or values. For example, clustering algorithm **500** can quantify how close to parts or to each other based on their attributes. This closeness can be for example, a cosine similarity, Euclidean distance, and Manhattan distance, a jacquard similarity, or other type of measurement of distance. In this example, a threshold rule, distance, cut off, or model based clustering can be used rather than thresholds.

Results of the outputs from clustering algorithm **500** is used to create cluster model **417.** This cluster model contains cluster descriptions for each of the part or groups. This description can include at least one of part number, description, material, model, subassembly, assembly, and other information. This information can be placed into a compressed format. Thus, as a function, cluster model **417** can map information such as part description, part material, part manufacturer, model that utilizes the part, subassembly and assembly.

In this illustrative example, cluster model **417** can identify a part group for parts that have been processed using the clustering algorithm **500.** This cluster model can also be used to identify a part group for a part that has not been used in clustering algorithm **500** to create cluster model **417.**

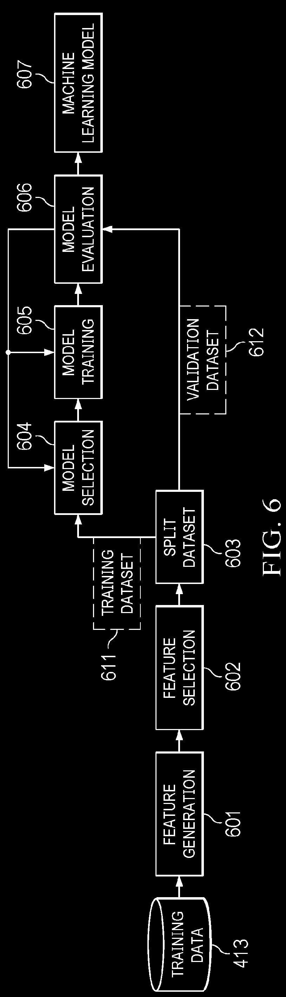

Referring now to **Figure 6****,** an illustration of a block diagram of dataflow for creating a machine learning model to predict a quantile aggregate demand for a reorder point is depicted in accordance with an illustrative embodiment. Dataflow in this block diagram is example of an implementation for reorder point modeling **303** in **Figure 3** in which a machine learning model is trained to predict quantile-based aggregate demand for use as a reorder point.

In this illustrative example, feature generation **601** is performed on training data **413** to extract features and information from training data **413.**

For example, training data **413** can include part descriptions and the generation determines part textual arguments from the part description. Feature generation **601** can create many arguments from the information in training data **413.** In this example, feature generation **601** can be implemented using machine learning models that extract structured attributes from unstructured data. These models tokenize the text, embed the tokens into high-dimensional vectors, and process them to produce contextualized embeddings that represent the underlying meaning. Examples of machine learning models that can be used include at least one of transformer-based language models, layout-aware models, embedding models, or other suitable types of machine learning models.

Feature selection **602** is performed in the process to determine which of these arguments generated by feature generation **601** are useful for training a machine learning model. In this example, feature selection **602** can be implemented using at least one of backward search, branch and bound, genetic algorithms, or other suitable algorithms.

Next, split dataset **603** is performed to partition the selected arguments into training dataset **611** and validation dataset **612.** Training dataset **611** is used for training and can include input data along with corresponding labels or expected outputs. The validation dataset **612** is used during training to evaluate the model's performance on unseen examples and to tune parameters as needed to avoid over fitting.

In the process, model selection **604** involves selecting a machine learning model for training. Multiple types of machine learning models can be present and one of these models is selected by model selection for training. The machine learning models can be selected from at least one of a deep learning model, a quantile regression tree, a random forest, a neural network, a quantile support vector regression model, or other types of machine learning models.

This model selection can also include setting hyper-parameters. These hyper parameters can be set to specify learning process and model behavior. These parameters can influence aspects such as the complexity of the model, learning rate, number of layers or units, and other attributes for the machine learning model.

The process then performs model training **605** for the selected machine learning model using training dataset **611.** The training is performed to train machine learning model to predict quantile-based aggregate demand.

Next the model evaluation **606** is performed using validation dataset **612.** This evaluation involves using data in validation dataset **612** not used on the machine learning model during training. The evaluation involves determining the accuracy of the machine learning model.

In some cases, a new machine learning model is selected. The selection of a "new model" may involve selecting the same model but using different settings for the hyper parameters. In other cases, more training of the machine learning model is performed.

When the evaluation is complete and selecting a new model or further training is not needed, the result is machine learning model **607** that has been trained to predict quantile based aggregate demand for use as the reorder point.

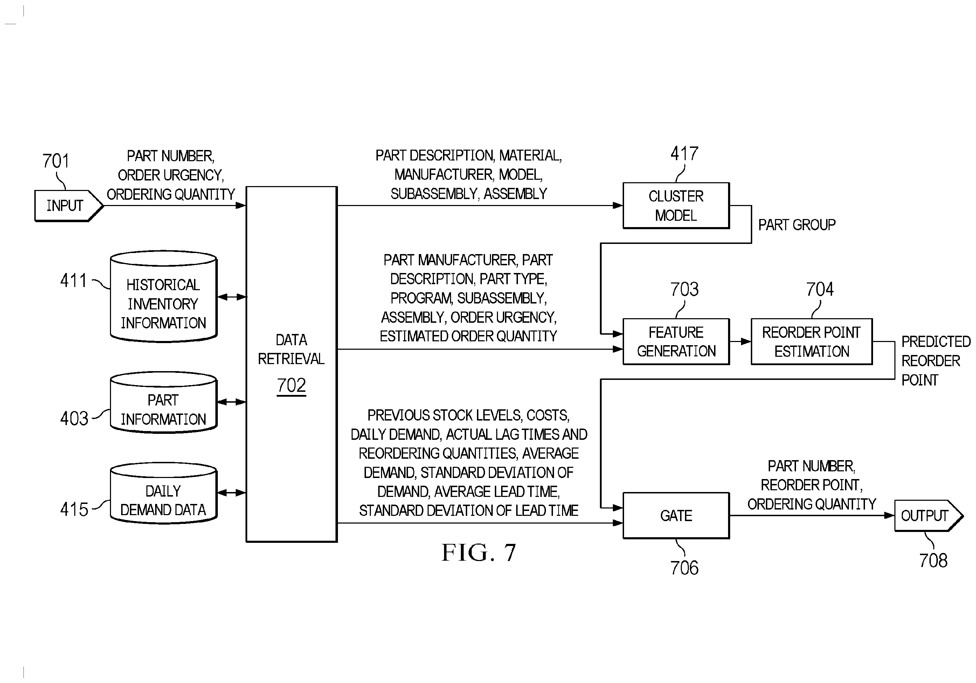

Tuning to **Figure 7****,** an illustration of a block diagram of a dataflow for determining a reorder point is depicted in accordance with an illustrative embodiment. The dataflow in this figure is example of an implementation for reorder point determination **304** in **Figure 3****.** In this example, input **701** receives information to determine a reorder point. In this example, input **701** receives the part number. Optionally, order urgency, estimated ordering, and quantity can also be received at input **701.** In this example, input **701** can be implemented as an application programming interface (API). This API can be an interface to another program or system for receiving requests to determine reorder points,

This information is sent from input **701** to data retrieval **702** for use in retrieving historical inventory information **411,** part information **403,** and daily demand data **415** to determine the reorder point. For example, data retrieval **702** retrieves part description, material, manufacturer, model, subassembly, and assembly from part information **403** for the part identified by the part number received by input **701.**

Data retrieval **702** sends this information to cluster model **417.** This cluster model determines the part group of the part identified by the part number received at input **701.**

In this example, data retrieval **702** retrieves part manufacturer, part description, part type, program, subassembly, and assembly in part information **403** and sends this information to feature generation **703.** Data retrieval **702** also sends order urgency, and estimated ordering quantity from input **701** to feature generation **703.**

In this example, feature generation **703** uses this information from data retrieval and the part group from cluster model **417** to generate features in the form attributes from this information for use in estimating the reorder point. These attributes are in a form that is expected by a machine learning model in reorder point estimation **704.** In this example, this input to the machine learning model results in an output that is a prediction of a quantile-base aggregate demand that is used as the reorder point for the part.

In this illustrative example, gate **706** is another function that can be used to determine whether the reorder point determined using machine learning model should be used or if a reorder point calculated using a classic reordering method should be used.

In this illustrative example, gate **706** receives previous stock levels, cost, daily demand, actual lag times, reordering quantities, average demand, standard deviation of demand, average lead time, and standard deviation of lead time. This information is received from data retrieval **702,** which retrieves this information from daily demand data **415.**

This information is used to calculate a reorder point using a classic reordering method used by gate **706.** Further, this information is used to determine the performance metrics using a classic reorder point determined by the classic reordering method and the predicted reorder point received by reorder point estimation **704.** This predicted reorder point is an example of reorder point **225** in **Figure 2****.**

Gate **706** determines which reorder point should be used based on a number of key performance metrics calculated for each of the reorder points. That reorder point is sent to output **708.**

In this example, part number and ordering quantity is also sent to output **708.** This output can be implemented using an application programming interface (API) that can be interfaced to an inventory management or ordering system for use in ordering the part.

The illustration of the dataflow in **Figures 7** is presented as an example and not meant to limit the manner in which reorder points can be determined in other illustrative examples.

For example, a part number is one example of a part identifier. In other illustrative examples, other types of identifiers can be used such as a serial number, a lot and batch number, a manufacturer and model, and other types of identifiers that can uniquely identify the part from other types of parts. Also, other information such as order urgency, estimated ordering, and quantity are optional with respect to the design and use of the machine learning model to predict a quantile-based aggregate demand to use as a reorder point.

As another example, not all information used by the different components are shown as being passed through the different flows. The information shown is meant to illustrate the features in the illustrative example and not shown to avoid obscuring the description of the illustrative example. For example, part number and ordering quantity can be received at output **708** from gate **706** even though these are not shown as flowing directly or indirectly from input **701** to gate **706** in which this information flows from data retrieval **702** to gate **706.** In another example, the part number and order quantity can be received at output **708** directly from input **701.**

In yet another illustrative example, gate **706** can be omitted. Further, gate **706** can provide a comparison with two or more classic reordering methods such that the choice is between the reorder points predicted in reorder point estimation **704** by the machine learning model and the reorder points calculated using the classic reordering methods.

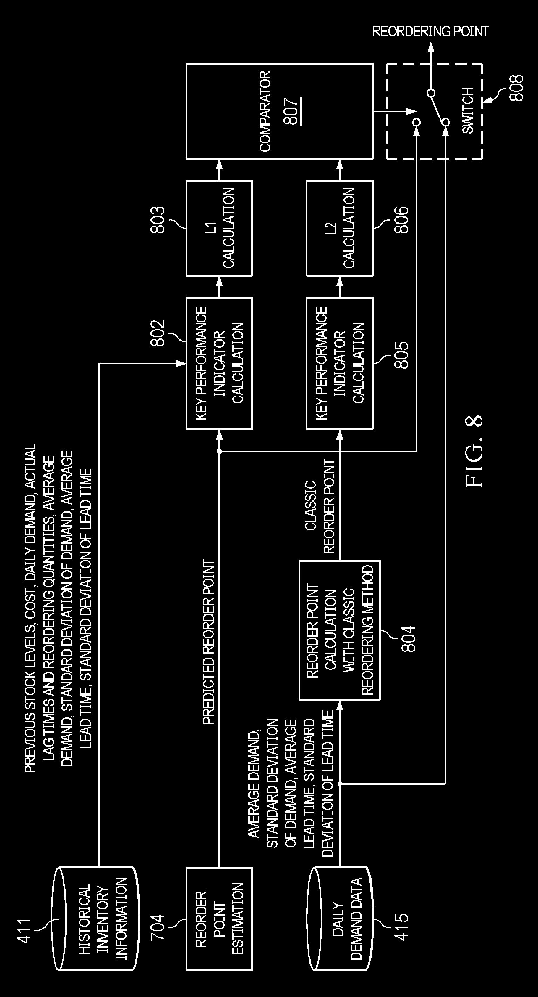

Turning now to **Figure 8****,** an illustration of a dataflow for a gate is depicted in accordance with an illustrative embodiment. In this illustrative example, the dataflow is an example of dataflow performed by gate **706** in **Figure 7****.** This data flow for gate **706** operates to select the optimal reorder point between the order points generated by the classic a reordering method and reorder point estimation **704.**

In this example, historical inventory information **411** provides previous stock levels, cost, daily demand, actual lag times, reordering quantities, average demand, standard deviation of demand, average lead time, and standard deviation of lead time. This information is used in key performance indicator calculation **802** to calculate key performance indicators based on the predicted reorder point received from reorder point estimation **704.** These key performance indicators can then be weighted in L1 calculation **803** to give different weights to different indicators depending on the importance of the indicators.

Further in this example, average demand, standard deviation of demand, average lead time, standard deviation of lead time sent from daily demand data **415** to reorder point calculation with classic reordering method **804** to calculate a classic reorder point. This classic reorder point and daily demand data **415** is used in key performance indicator calculation **805** to determine a number of key performance indicators for the calculated reorder point. The number of key performance indicators can be weighted using L2 calculation **806** that can assign weights to different indicators based on the importance of those indicators.

These weighted key point indicators are sent to comparator **807.** This comparator determines which reorder point is the optimal reorder point for use in ordering parts. That reorder point is output at switch **808.** The switch is moved to output the reorder points that has the best key performance indicators as determined by comparator **807.**

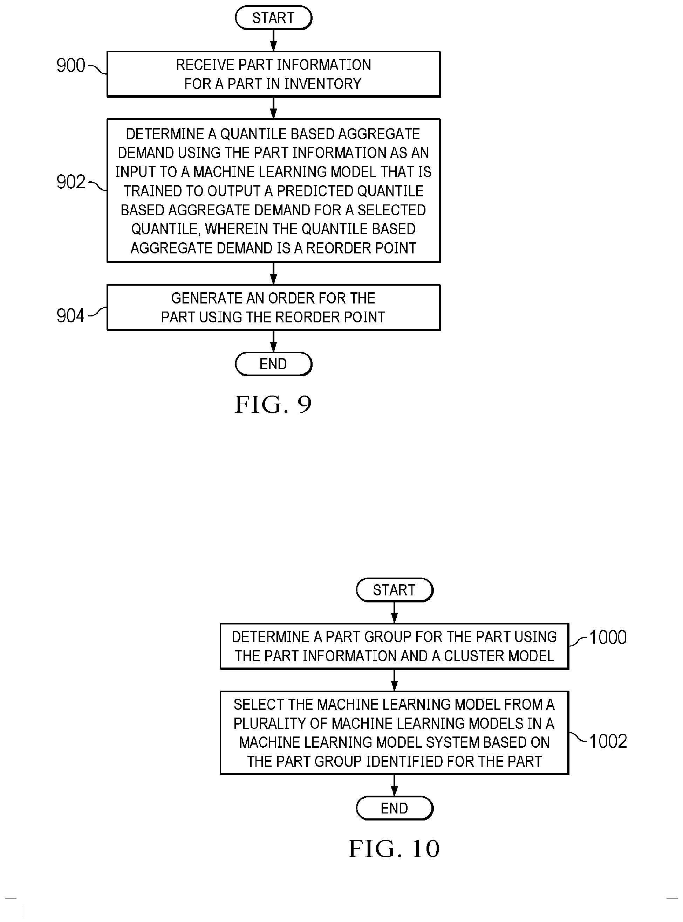

Turning next to **Figure 9****,** an illustration of a flowchart of a process for ordering parts is depicted in accordance with an illustrative embodiment. The process in **Figure 9** can be implemented in hardware, software, or both. When implemented in software, the process can take the form of program instructions that are run by one of more processor units located in one or more hardware devices in one or more computer systems. For example, the process can be implemented in part manager **214** in computer system **212** in **Figure 2****.**

The process receives part information for a part in inventory (operation **900).** The process determines a quantile based aggregate demand using the part information as an input to a machine learning model that is trained to output a predicted quantile based aggregate demand for a selected quantile, wherein the quantile based aggregate demand is a reorder point (operation **902**).

The process generates an order for the part using the reorder point (operation **904**). The process terminates thereafter. In this example, a practical application of determining the reorder point occurs in the ordering department based on the prediction made by the machine learning model. Further, this will result in a practical application of replenishing an inventory for a part that occurs when the part is received after the order has been made.

With reference to **Figure 10****,** an illustration of a flowchart of a process for selecting a machine learning model to predict a quantile based aggregate demand is depicted in accordance with an illustrative embodiment. The process in this flowchart is an example of additional operations that can be performed with the operations in **Figure 9****.**

The process determines a part group for the part using the part information and a cluster model (operation **1000**). The process selects the machine learning model from a plurality of machine learning models in a machine learning model system based on the part group identified for the part (operation **1002**). The process terminates thereafter.

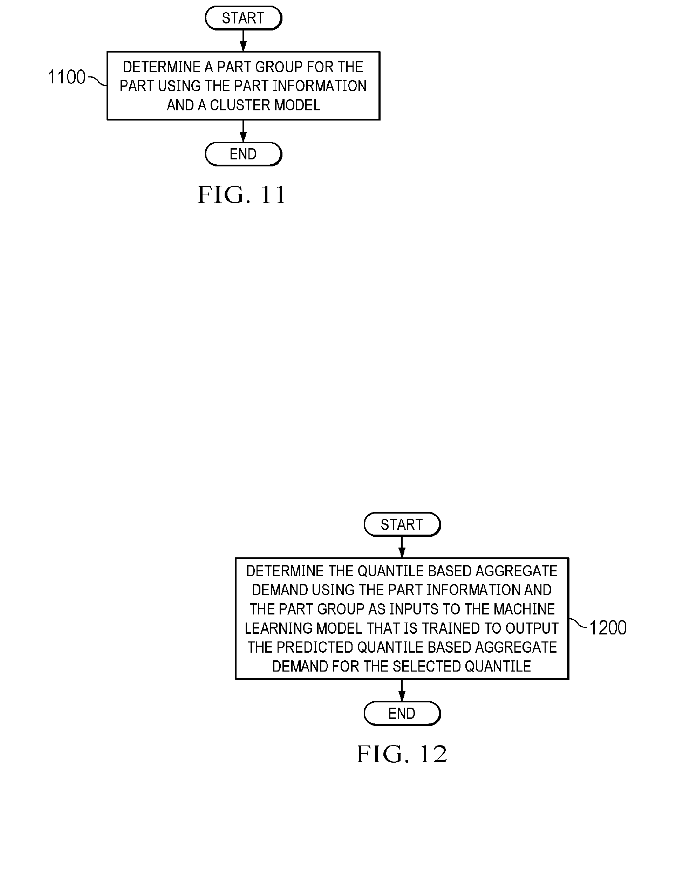

Referring to **Figure 11****,** an illustration of a flowchart of a process for determining a part group for a part is depicted in accordance with an illustrative embodiment. The process in this flowchart is an example of additional operations that can be performed with the operations in **Figure 9****.**

The process determines a part group for the part using the part information and a cluster model (operation **1100**). The process terminates thereafter.

Turning to **Figure 12****,** an illustration of a flowchart of a process for determining a quantile aggregate demand using part information and a part group is depicted in accordance with an illustrative embodiment. The process in this figure is an example of an implementation for operation **902** in **Figure 9** using the part group determined in **Figure 11****.**

The process determines the quantile based aggregate demand using the part information and the part group as inputs to the machine learning model that is trained to output the predicted quantile based aggregate demand for the selected quantile (operation **1200**). The process terminates thereafter.

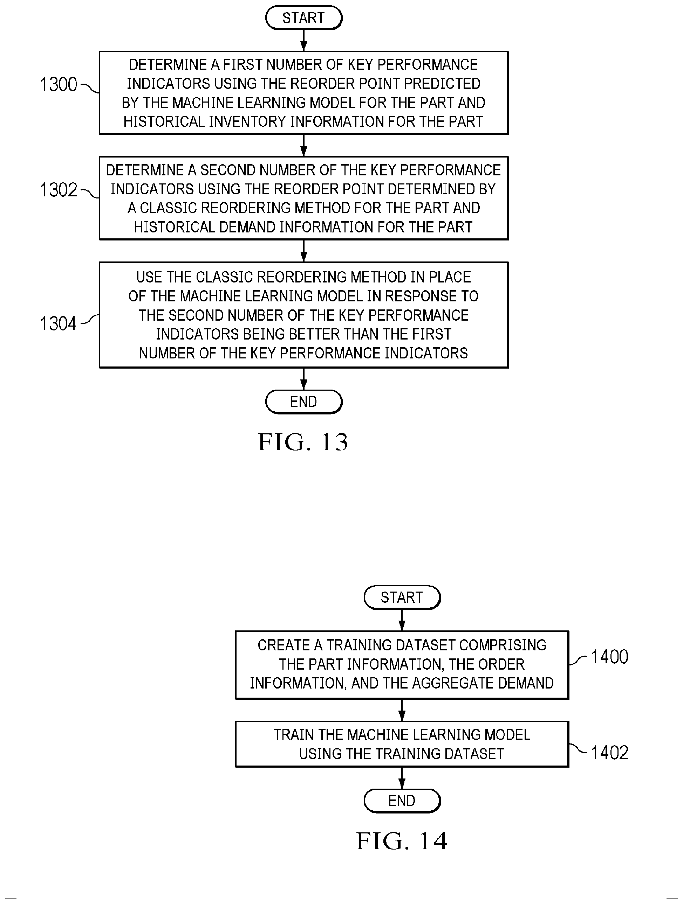

Next in **Figure 13****,** an illustration of a flowchart of a process for selecting a reorder point selection technique is depicted in accordance with an illustrative embodiment. The process in this flowchart is an example of additional operations that can be performed with the operations and **Figure 9****.**

The process determines a first number of key performance indicators using the reorder point predicted by the machine learning model for the part and historical inventory information for the part (operation **1300**). The process determines a second number of the key performance indicators using the reorder point determined by a classic reordering method for the part and historical demand information for the part (operation **1302**).

In this example, key performance indicators can be selected from at least one of a total number of out of stock intervals, a total duration of the out of stock intervals, a total holding cost, a percentage of demand met without stockouts, or other key point indicators. In some examples, the key performance indicators can be assigned weights based on inventory management objectives.

The process uses the classic reordering method in place of the machine learning model in response to the second number of the key performance indicators being better than the first number of the key performance indicators (operation **1304**). The process terminates thereafter.

With reference to **Figure 14****,** an illustration of a flowchart of a process for training a machine learning model is depicted in accordance with an illustrative embodiment. The process in **Figure 14** can be implemented in hardware, software, or both. When implemented in software, the process can take the form of program instructions that are run by one of more processor units located in one or more hardware devices in one or more computer systems. For example, the process can be implemented in part manager **214** in computer system **212** in **Figure 2****.**

The process creates a training dataset comprising the part information, the order information, and the aggregate demand (operation **1400**). In operation **1400,** the part information comprises a part number and optionally at least one of a part description, a part manufacturer, a part group, a part type, a program product, an assembly, a subassembly, or other part information. Also, the order information comprises order date, quantity ordered, order urgency, and other order information.

The process trains the machine learning model using the training dataset (operation **1402**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

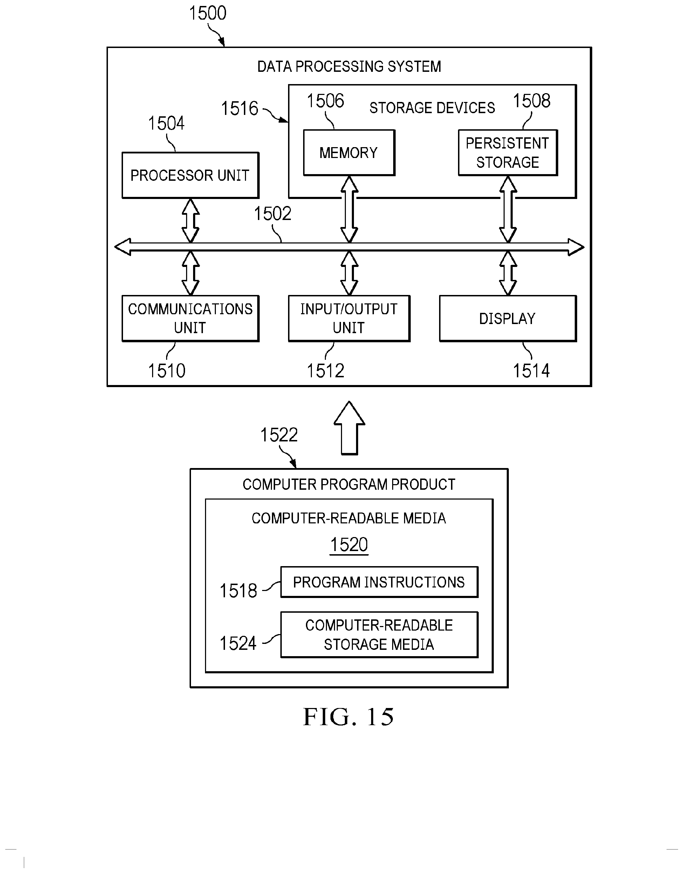

Turning now to **Figure 15****,** an illustration of a block diagram of a data processing system is depicted in accordance with an illustrative embodiment. Data processing system **1500** can be used to implement server computer **104,** server computer **106,** client devices **110,** in **Figure 1****.** Data processing system **1500** can also be used to implement computer system **212** in **Figure 2****.** In this illustrative example, data processing system **1500** includes communications framework **1502,** which provides communications between processor unit **1504,** memory **1506,** persistent storage **1508,** communications unit **1510,** input/output (I/O) unit **1512,** and display **1514.** In this example, communications framework **1502** takes the form of a bus system.

Processor unit **1504** serves to execute instructions for software that can be loaded into memory **1506.** Processor unit **1504** includes one or more processors. For example, processor unit **1504** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1504** can be implemented using one or more heterogeneous processor systems in which a main processor is present with secondary processors on a single chip. As another illustrative example, processor unit **1504** can be a symmetric multi-processor system containing multiple processors of the same type on a single chip.

Memory **1506** and persistent storage **1508** are examples of storage devices **1516.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1516** may also be referred to as computer-readable storage devices in these illustrative examples. Memory **1506,** in these examples, can be, for example, a random-access memory or any other suitable volatile or non-volatile storage device. Persistent storage **1508** may take various forms, depending on the particular implementation.

For example, persistent storage **1508** may contain one or more components or devices. For example, persistent storage **1508** can be a hard drive, a solidstate drive (SSD), a flash memory, a rewritable optical disk, a rewritable magnetic tape, or some combination of the above. The media used by persistent storage **1508** also can be removable. For example, a removable hard drive can be used for persistent storage **1508.**

Communications unit **1510,** in these illustrative examples, provides for communications with other data processing systems or devices. In these illustrative examples, communications unit **1510** is a network interface card.

Input/output unit **1512** allows for input and output of data with other devices that can be connected to data processing system **1500.** For example, input/output unit **1512** may provide a connection for user input through at least one of a keyboard, a mouse, or some other suitable input device. Further, input/output unit **1512** may send output to a printer. Display **1514** provides a mechanism to display information to a user.

Instructions for at least one of the operating system, applications, or programs can be located in storage devices **1516,** which are in communication with processor unit **1504** through communications framework **1502.** The processes of the different embodiments can be performed by processor unit **1504** using computerimplemented instructions, which may be located in a memory, such as memory **1506.**

These instructions are referred to as program instructions, computer usable program instructions, or computer-readable program instructions that can be read and executed by a processor in processor unit **1504.** The program instructions in the different embodiments can be embodied on different physical or computer-readable storage media, such as memory **1506** or persistent storage **1508.**

Program instructions **1518** are located in a functional form on computer-readable media **1520** that is selectively removable and can be loaded onto or transferred to data processing system **1500** for execution by processor unit **1504.** Program instructions **1518** and computer-readable media **1520** form computer program product **1522** in these illustrative examples. In the illustrative example, computer-readable media **1520** is computer-readable storage media **1524.**

Computer readable storage media **1524** is a physical or tangible storage device used to store program instructions **1518** rather than a medium that propagates or transmits program instructions **1518.** Computer readable storage media **1524** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer readable storage media **1524,** as that term is used in the present disclosure, is optionally not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, defragmentation or garbage collection. However, these operations optionally do not render the storage device as transitory because the data is optionally not transitory while the data is stored in the storage device.

Alternatively, program instructions **1518** can be transferred to data processing system **1500** using a computer-readable signal media. The computer-readable signal media are signals and can be, for example, a propagated data signal containing program instructions **1518.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1520"** can be singular or plural. For example, program instructions **1518** can be located in computer-readable media **1520** in the form of a single storage device or system. In another example, program instructions **1518** can be located in computer-readable media **1520** that is distributed in multiple data processing systems. In other words, some instructions in program instructions **1518** can be located in one data processing system while other instructions in program instructions **1518** can be located in one data processing system. For example, a portion of program instructions **1518** can be located in computer-readable media **1520** in a server computer while another portion of program instructions **1518** can be located in computer-readable media **1520** located in a set of client computers.

The different components illustrated for data processing system **1500** are not meant to provide architectural limitations to the manner in which different embodiments can be implemented. In some illustrative examples, one or more of the components may be incorporated in or otherwise form a portion of, another component. For example, memory **1506,** or portions thereof, may be incorporated in processor unit **1504** in some illustrative examples. The different illustrative embodiments can be implemented in a data processing system including components in addition to or in place of those illustrated for data processing system **1500.** Other components shown in **Figure 15** can be varied from the illustrative examples shown. The different embodiments can be implemented using any hardware device or system capable of running program instructions **1518.**

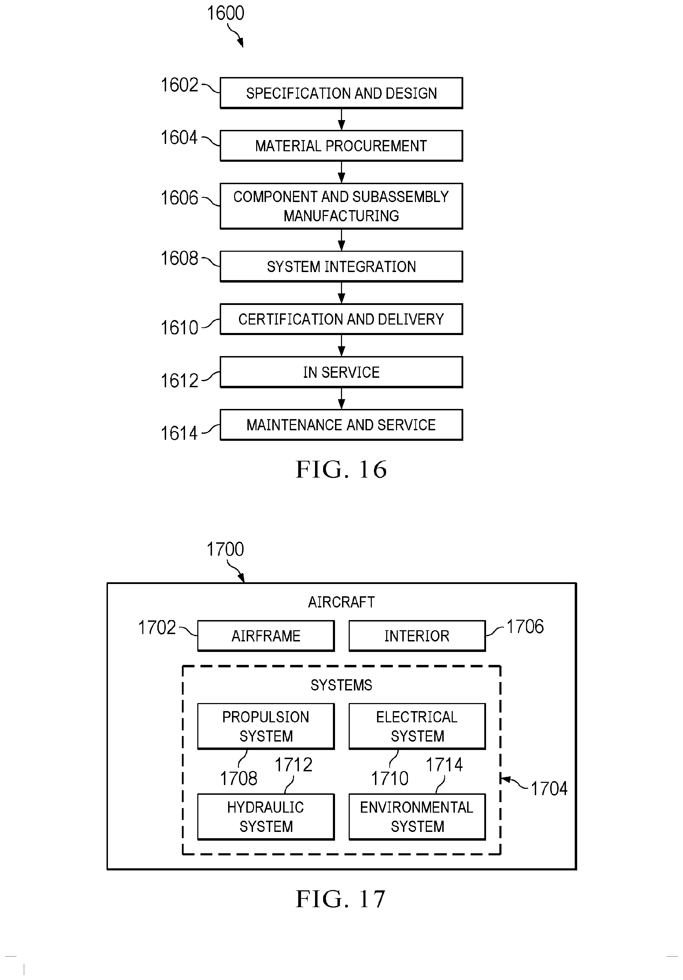

Illustrative embodiments of the disclosure may be described in the context of aircraft manufacturing and service method **1600** as shown in **Figure 16** and aircraft **1700** as shown in **Figure 17****.** Turning first to **Figure 16****,** an illustration of a block diagram of an aircraft manufacturing and service method is depicted in accordance with an illustrative embodiment. During preproduction, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** can go through certification and delivery **1610** in order to be placed in service **1612.** While in service **1612** by a customer, aircraft **1700** in **Figure 17** is scheduled for routine maintenance and service **1614,** which may include modification, reconfiguration, refurbishment, and other maintenance or service.

Each of the processes of aircraft manufacturing and service method **1600** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of a block diagram of an aircraft is depicted in which an illustrative embodiment may be implemented. In this example, aircraft **1700** is produced by aircraft manufacturing and service method **1600** in **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1600** in **Figure 16****.**

In one illustrative example, components or subassemblies produced in component and subassembly manufacturing **1606** in **Figure 16** can be fabricated or manufactured in a manner similar to components or subassemblies produced while aircraft **1700** is in service **1612** in **Figure 16****.** As yet another example, one or more apparatus embodiments, method embodiments, or a combination thereof can be utilized during production stages, such as component and subassembly manufacturing **1606** and system integration **1608** in **Figure 16****.** One or more apparatus embodiments, method embodiments, or a combination thereof may be utilized while aircraft **1700** is in service **1612,** during maintenance and service **1614** in **Figure 16****,** or both. The use of a number of the different illustrative embodiments may substantially expedite the assembly of aircraft **1700,** reduce the cost of aircraft **1700,** or both expedite the assembly of aircraft **1700** and reduce the cost of aircraft **1700.**

For example, part manager **214** in **Figure 2** can be determine reorder points for parts and inventory that are used in component and subassembly manufacturing **1606** and in system integration **1608.** Further, part manager **214** can also be used to order parts for using during routine maintenance and service **1614.** These parts may be used during modification, reconfiguration, refurbishment, and other maintenance or service on aircraft **1700.**

The illustrative examples provide a method, apparatus, system, and computer program product for ordering parts. For example, a method is disclosed for ordering parts. Part information is received for a part in inventory. A quantile based aggregate demand is determined using the part information as an input to a machine learning model that is trained to output a predicted quantile based aggregate demand for a selected quantile, wherein the quantile based aggregate demand is a reorder point. An order is generated for the part using the reorder point.

This ordering of a part to replenish inventor can be performed with greater accuracy as compared to current techniques in which various factors such as demand and lead time are considered independent of each other. Further, the illustrative examples enable predicting a reorder points to place an order enabling maintaining desired costs and availability of the parts in response to demand.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

**The disclosure includes the following clauses:**
1. A part inventory system comprising:
   a computer system; and
   a part manager located in the computer system, wherein the part manager is configured to perform operations comprising:
      receiving part information for a part in inventory;
      determining a quantile based aggregate demand using the part information as an input to a machine learning model that is trained to output a predicted quantile based aggregate demand for a selected quantile, wherein the quantile based aggregate demand is a reorder point; and
      generating an order for the part using the reorder point.
2. The part inventory system of clause 1, wherein the operations further comprise:
   determining a part group for the part using the part information and a cluster model; and
   selecting the machine learning model from a plurality of machine learning models in a machine learning model system based on the part group identified for the part.
3. The part inventory system of clause 1 or clause 2, wherein the operations further comprise:
   determining a part group for the part using the part information and a cluster model;
   wherein determining the quantile based aggregate demand comprises:
      determining the quantile based aggregate demand using the part information and the part group as inputs to the machine learning model that is trained to output the predicted quantile based aggregate demand for the selected quantile.
4. The part inventory system of any preceding clause, wherein the operations further comprise:
   creating a training dataset comprising the part information, order information, and aggregate demand; and
   training the machine learning model using the training dataset.
5. The part inventory system of clause 4, wherein:
   the part information comprises a part number and optionally at least one of a part description, a part manufacturer, a part group, a part type, a program product, an assembly, or a subassembly; and
   the order information comprises order date, quantity ordered and order urgency.
6. The part inventory system of any preceding clause, wherein the operations further comprise:
   determining a first number of key performance indicators using the reorder point predicted by the machine learning model for the part and historical inventory information for the part;
   determining a second number of the key performance indicators using the reorder point determined by a classic reordering method for the part and historical demand information for the part; and
   using the classic reordering method in place of the machine learning model in response to the second number of the key performance indicators being better than the first number of the key performance indicators.
7. The part inventory system of clause 6, wherein the key performance indicators are selected from at least one of a total number of out of stock intervals, a total duration of the out of stock intervals; a total holding cost; or a percentage of demand met without stockouts.
8. The part inventory system of clause 6 or clause 7, wherein the key performance indicators are assigned weights based on inventory management objectives.
9. The part inventory system of any preceding clause, wherein the machine learning model is selected from a group comprising a linear regression model, a random forest regression model, a neural network, and a support vector regression model.
9a. The part inventory system of any preceding clause, wherein the part inventory system is configured to replenish the inventory for the part.
9b. The part inventory system of any preceding clause, wherein the part manager is configured to further perform operations comprising:
   sending the order for the part; and
   receiving the part.
10. A part inventory system comprising:
   a computer system;
   a machine learning model in the computer system, wherein the machine learning model has been trained to predict quantile aggregate demands for a quantile for parts using part information;
   a cluster model in the computer system, wherein the cluster model is configured to determine a part group for a part using the part information; and
   a part manager in the computer system, wherein the part manager is configured to perform operations comprising:
      receiving part information for a part in inventory;
      determining a quantile based aggregate demand using the part information as an input to the machine learning model, wherein the quantile based aggregate demand is a reorder point; and
      generating an order for the part using the reorder point.
11. The part inventory system of clause 10 further comprising:
   a gate configured to:
   determine a first number of key performance indicators using the reorder point predicted by the machine learning model for the part and historical inventory information for the part;
   determine a second number of the key performance indicators using the reorder point determined by a classic reordering method for the part and historical demand information for the part; and
   use the classic reordering method in place of the machine learning model in response to the second number of the key performance indicators being better than the first number of the key performance indicators.
11a. The part inventory system of clause 10 or clause 11, wherein the part inventory system is configured to replenish the inventory for the part.
11b. The part inventory system of any of clauses 10 to 11a, wherein the part manager is configured to further perform operations comprising:
   sending the order for the part; and
   receiving the part.
12. A method for ordering parts comprising:
   receiving, by a computer system, part information for a part in inventory;
   determining, by the computer system, a quantile based aggregate demand using the part information as an input to a machine learning model that is trained to output a predicted quantile based aggregate demand for a selected quantile, wherein the quantile based aggregate demand is a reorder point; and
   generating, by the computer system, an order for the part using the reorder point.
13. The method of clause 12, further comprising:
   determining, by the computer system, a part group for the part using the part information and a cluster model; and
   selecting, by the computer system, the machine learning model from a plurality of machine learning models in a machine learning model system based on the part group identified for the part.
14. The method of clause 12 or clause 13, further comprising:
   determining, by the computer system, a part group for the part using the part information and a cluster model;
   wherein determining the quantile based aggregate demand, by the computer system, comprises:
      determining, by the computer system, the quantile based aggregate demand using the part information and the part group as inputs to the machine learning model that is trained to output the predicted quantile based aggregate demand for the selected quantile.
15. The method system of clause 14, further comprising:
   creating, by the computer system, a training dataset comprising the part information, order information, and aggregate demand; and
   training, by the computer system, the machine learning model using the training dataset.
16. The method of clause 15, wherein:
   the part information comprises a part number and optionally at least one of a part description, a part manufacturer, a part group, a part type, a program product, an assembly, or a subassembly; and
   the order information comprises order date, quantity ordered and order urgency.
17. The method of any of clauses 12 to 16, further comprising:
   determining, by the computer system, a first number of key performance indicators using the reorder point predicted by the machine learning model for the part and historical inventory information for the part;
   determining, by the computer system, a second number of the key performance indicators using the reorder point determined by a classic reordering method for the part and historical demand information for the part; and
   using, by the computer system, the classic reordering method in place of the machine learning model in response to the second number of the key performance indicators being better than the first number of the key performance indicators.
18. The method of clause 17, wherein the key performance indicators are selected from at least one of a total number of out of stock intervals, a total duration of the out of stock intervals; a total holding cost; or a percentage of demand met without stockouts.
19. The method of clause 17 or clause 18, wherein the key performance indicators are assigned weights based on inventory management objectives.
20. The method of any of clauses 12 to 19, wherein the machine learning model is selected from a group comprising a linear regression model, a random forest regression model, a neural network, and a support vector regression model.
20a. The method of any of clauses 12 to 20, wherein the method is a method of for ordering parts to replenish the inventory for the part.
20b. The method of any of clauses 12 to 20a, the method further comprising:
   sending, by the computer system, the order for the part; and
   receiving the part.
21. A computer program product for ordering parts, the computer program product comprising:
   a set of one or more computer-readable storage media; and
   program instructions stored on the set of one or more storage media to perform operations comprising:
      receiving part information for a part in inventory;
      determining a quantile based aggregate demand using the part information as an input to a machine learning model that is trained to output a predicted quantile based aggregate demand for a selected quantile, wherein the quantile based aggregate demand is a reorder point; and
      generating an order for the part using the reorder point.
21a. The computer program product of clause 21, wherein the computer program product is for ordering parts to replenish the inventory for the part.
21b. The computer program product of clause 21 or clause 21a, wherein the program instructions stored on the set of one or more storage media to perform operations further comprising:
   sending, by the computer system, the order for the part; and
   receiving the part.
21c. A computer program product for ordering parts, the computer program product comprising:
   a set of one or more computer-readable storage media; and
   program instructions stored on the set of one or more storage media to perform operations comprising the method of any of clauses 12 to 20b.

## Claims

1. A part inventory system (202) comprising:
a computer system (212); and
a part manager (214)located in the computer system (212), wherein the part manager (214)is configured to perform operations comprising:
receiving part information (220, 403) for a part (221) in inventory (222);
determining a quantile based aggregate demand (273) (223) using the part information (220, 403) as an input to a machine learning model (224) that is trained to output a predicted quantile based aggregate demand (273) (223) for a selected quantile, wherein the quantile based aggregate demand (273) (223) is a reorder point (225); and
generating an order (226) for the part (221) using the reorder point (225).

2. The part inventory system (202) of claim 1, wherein the operations further comprise:
determining a part group (227) for the part (221) using the part information (220, 403) and a cluster model (228, 417); and
selecting the machine learning model (224) from a plurality of machine learning models (229) in a machine learning model system (230) based on the part group (227) identified for the part (221).

3. The part inventory system (202) of claim 1 or claim 2, wherein the operations further comprise:
determining a part group (227) for the part (221) using the part information (220, 403) and a cluster model (228, 417);
wherein determining the quantile based aggregate demand (273) (223) comprises:
determining the quantile based aggregate demand (273) (223) using the part information (220, 403) and the part group (227) as inputs to the machine learning model (224) that is trained to output the predicted quantile based aggregate demand (273) (223) for the selected quantile.

4. The part inventory system (202) of any preceding claim, wherein the operations further comprise:
creating a training dataset (270, 611) comprising the part information (271), order information (272, 402) (272), and aggregate demand (273) (273); and
training the machine learning model (224) using the training dataset (270, 611).

5. The part inventory system (202) of claim 4, wherein:
the part information (220, 403) comprises a part number and optionally at least one of a part description, a part manufacturer, a part group (227), a part type, a program product, an assembly, or a subassembly; and
the order information (272, 402) comprises order date, quantity ordered and order urgency.

6. The part inventory system (202) of any preceding claim, wherein the operations further comprise:
determining a first number of key performance indicators (232) using the reorder point (225) predicted by the machine learning model (224) for the part (221) and historical inventory (information (233, 411) for the part (221);
determining a second number of the key performance indicators (232) using the reorder point (225) determined by a classic reordering method (231) for the part (221) and historical demand information for the part (221); and
using the classic reordering method (231) in place of the machine learning model (224) in response to the second number of the key performance indicators (232) being better than the first number of the key performance indicators (232).

7. The part inventory system (202) of claim 6, wherein the key performance indicators (232) are selected from at least one of a total number of out of stock intervals, a total duration of the out of stock intervals; a total holding cost; or a percentage of demand met without stockouts, and/or,
wherein the key performance indicators (232) are assigned weights based on inventory (222) management objectives.

8. The part inventory system (202) of any preceding claim, wherein the machine learning model (224) is selected from a group comprising a linear regression model, a random forest regression model, a neural network, and a support vector regression model.

9. A part inventory system (202) comprising:
a computer system (212);
a machine learning model (224) in the computer system (212), wherein the machine learning model (224) has been trained to predict quantile aggregate demand (273)s for a quantile for parts using part information (220, 403);
a cluster model (228, 417) in the computer system (212), wherein the cluster model (228, 417) is configured to determine a part group (227) for a part (221) using the part information (220, 403); and
a part manager (214)in the computer system (212), wherein the part manager (214)is configured to perform operations comprising:
receiving part information (220, 403) for a part (221) in inventory (222);
determining a quantile based aggregate demand (273) (223) using the part information (220, 403) as an input to the machine learning model (224), wherein the quantile based aggregate demand (273) (223) is a reorder point (225); and
generating an order (226) for the part (221) using the reorder point (225).

10. The part inventory system (202) of claim 9 further comprising:
a gate configured to:
determine a first number of key performance indicators (232) using the reorder point (225) predicted by the machine learning model (224) for the part (221) and historical inventory (information (233, 411) for the part (221);
determine a second number of the key performance indicators (232) using the reorder point (225) determined by a classic reordering method (231) for the part (221) and historical demand information for the part (221); and
use the classic reordering method (231) in place of the machine learning model (224) in response to the second number of the key performance indicators (232) being better than the first number of the key performance indicators (232).

11. A method for ordering parts comprising:
receiving (900), by a computer system (212), part information (220, 403) for a part (221) in inventory (222);
determining (902), by the computer system (212), a quantile based aggregate demand (273) (223) using the part information (220, 403) as an input to a machine learning model (224) that is trained to output a predicted quantile based aggregate demand (273) (223) for a selected quantile, wherein the quantile based aggregate demand (273) (223) is a reorder point (225); and
generating (904), by the computer system (212), an order (226) for the part (221) using the reorder point (225).

12. The method of claim 11, further comprising:
determining (1000), by the computer system (212), a part group (227) for the part using the part information (220, 403) and a cluster model (228, 417); and
selecting (1002), by the computer system (212), the machine learning model (224) from a plurality of machine learning models (229) in a machine learning model system (230) based on the part group (227) identified for the part (221), and/or,
wherein the machine learning model (224) is selected from a group comprising a linear regression model, a random forest regression model, a neural network, and a support vector regression model.

13. The method of claim 11 or claim 12, further comprising:
determining (1100), by the computer system (212), a part group (227) for the part (221) using the part information (220, 403) and a cluster model (228, 417);
wherein determining (902) the quantile based aggregate demand (273) (223), by the computer system (212), comprises:
determining (1200), by the computer system (212), the quantile based aggregate demand (273) (223) using the part information (220, 403) and the part group (227) as inputs to the machine learning model (224) that is trained to output the predicted quantile based aggregate demand (273) (223) for the selected quantile, optionally, further comprising:
creating (1400), by the computer system (212), a training dataset (270, 611) comprising the part information (220, 403), order information (272, 402), and aggregate demand (273); and
training (1402), by the computer system (212), the machine learning model (224) using the training dataset (270, 611), optionally, wherein:
the part information (220, 403) comprises a part number and optionally at least one of a part description, a part manufacturer, a part group (227), a part type, a program product, an assembly, or a subassembly; and
the order information (272, 402) comprises order date, quantity ordered and order urgency.

14. The method of any of claims 11 to 13, further comprising:
determining (1300), by the computer system (212), a first number of key performance indicators (232) using the reorder point (225) predicted by the machine learning model (224) for the part (221) and historical inventory (information (233, 411) for the part (221);
determining (1302), by the computer system (212), a second number of the key performance indicators (232) using the reorder point (225) determined by a classic reordering method (231) for the part (221) and historical demand information for the part (221); and
using (1304), by the computer system (212), the classic reordering method (231) in place of the machine learning model (224) in response to the second number of the key performance indicators (232) being better than the first number of the key performance indicators (232), optionally, wherein the key performance indicators (232) are selected from at least one of a total number of out of stock intervals, a total duration of the out of stock intervals; a total holding cost; or a percentage of demand met without stockouts, and/or, wherein the key performance indicators (232) are assigned weights based on inventory (222) management objectives.

15. A computer program product (1522) for ordering parts, the computer program product (1522) comprising:
a set of one or more computer-readable storage media (1520); and
program instructions (218, 1518) stored on the set of one or more storage media to perform operations comprising:
receiving part information (220, 403) for a part (221) in inventory (222);
determining a quantile based aggregate demand (273) (223) using the part information (220, 403) as an input to a machine learning model (224) that is trained to output a predicted quantile based aggregate demand (273) (223) for a selected quantile, wherein the quantile based aggregate demand (273) (223) is a reorder point (225); and
generating an order (226) for the part (221) using the reorder point (225).
